Europäisches Patentamt

European Patent Office

Office européen des brevets

(11) Publication number: **0 245 665**
**A2**

(12) **EUROPEAN PATENT APPLICATION**

(21) Application number: **87105478.9**

(22) Date of filing: **13.04.87**

(51) Int. Cl.⁴ **C08G 63/20** , C08L 27/06 ,
C08K 5/00

(30) Priority: **15.05.86 US 863634**

(43) Date of publication of application:
**19.11.87 Bulletin 87/47**

(84) Designated Contracting States:
**BE CH DE ES FR GB IT LI NL**

(71) Applicant: **NATIONAL DISTILLERS AND
CHEMICAL CORPORATION**
**99 Park Avenue**
**New York, NY 10016(US)**

(72) Inventor: **Mertz, William J.**
**6764 Kentford Court**
**Cincinnati, Ohio(US)**
Inventor: **Braun, Robert J.**
**1126 Nature Run Drive**
**Batavia, Ohio,(US)**

(74) Representative: **Patentanwälte Grünecker,
Kinkeldey, Stockmair & Partner**
**Maximilianstrasse 58**
**D-8000 München 22(DE)**

(54) Improved copolyester plasticizers for polyvinyl chloride.

(57) Copolyester plasticizer compositions useful for the formulation of PVC refrigerator gaskets which exhibit good resistance to migration and marring and improved processing characteristics are provided. The copolyesters are obtained by esterification of a mixture of phthalic acid (or anhydride) and an aliphatic $C_{5-10}$ saturated dicarboxylic acid with a mixture of neopentyl glycol and ethylene glycol and an aliphatic $C_{6-13}$ saturated monofunctional alcohol or aliphatic $C_{6-13}$ saturated monocarboxylic acid.

EP 0 245 665 A2

## IMPROVED COPOLYESTER PLASTICIZERS FOR POLYVINYL CHLORIDE

If a compound is to be an effective plasticizer for PVC and impart the desired softening, flexibilizing and toughening, the material must have some mobility within the PVC resin. If this mobility is not properly controlled, however, the plasticizer can migrate into other resins with which the plasticized PVC comes in contact.

Migration of PVC plasticizers into high impact polystyrene and acrylonitrile-butadiene-styrene (ABS) resins is a particular problem. Many of the ester compounds commonly used for the plasticization of PVC mar the surface of the polystyrene or ABS in those regions where the resins come into contact with the plasticized PVC. In more severe cases, stress cracking of the polystyrene and ABS resulting in rapid and catastrophic failure of the resin can occur.

Various polyester compositions have been developed to overcome the above-described problems. These polyesters are typically derived from branched-chain diols and aliphatic dicarboxylic acids. Viscosities are controlled by the use of conventional monocarboxylic acid or monofunctional alcohol terminators. Whereas acceptable migration characteristics can be achieved with these polyesters, the plasticizers are more expensive than polyesters based on phthalates and ethylene glycol.

Williams et. al., U.S. Patent No. 3,972,962 discloses chain-terminated non-migrating polyester plasticizers for PVC derived from aliphatic saturated dicarboxylic acids and branched-chain glycols. An aromatic monocarboxylic acid is necessarily employed as a chain terminator to obtain the desired balance of plasticizer properties.

Aylesworth et. al. in U.S. Patent No. 3,501,554 and 3,595,824 disclose non-chain terminated polyester plasticizers for PVC fabrics obtained by the reaction of two or more alkanedioic acids having from 4 to 12 carbon atoms with two or more alkylene glycols having from 2 to 6 carbon atoms. The Aylesworth et. al. plasticizer compositions exhibit superior resistance to drycleaning solvents, such as perchloroethylene.

Copolyester plasticizers and a process for their production are also described in Uno et. al., U.S. Patent No. 4,065,439. The copolyesters of Uno et. al. are derived from terephthalic acid, isophthalic acid a $C_{6-9}$ aliphatic dicarboxylic acid, ethylene glycol, and neopentyl glycol. These copolyesters are solid materials primarily useful as hot-melt type adhesives, however, they may also be used for paints, surface treating agents, binders and plasticizers.

U.S. Patent No. 3,700,957 to Daniels discloses polyester compositions having both flame retarding and plasticizing properties obtained by the reaction of a dicarboxylic acid, a glycol and 2,3-dibromomethyl-1,3-propanediol. The polyesters may be terminated with an alkanoic acid or alkanol chain terminator.

Other polyester plasticizers derived from diols and dicarboxylic acids are disclosed in Small et. al., U.S. Patent No. 2,555,062; Wilkinson et. al., U.S. Patent No. 2,815,354; and Walus. U.S. Patent no. 3,850,871.

It would be highly advantageous if non-migrating polyester plasticizers suitable for use in PVC resins and which exhibit good plasticization efficiency so that they can be utilized at low levels could be produced from low cost and readily available reactants. It would be even more desirable if these plasticizers imparted desirable processing characteristics to the PVC resin. These and other advantages are realized with the improved copolyester plasticizers of the present invention.

The improved copolyester plasticizer compositions of the present invention have average molecular weights from about 500 to 1500 and kinematic viscosities (100°F) from about 600 to about 2000 centistokes and are obtained by esterifying (a) a mixture of phthalic acid and an aliphatic saturated dicarboxylic acid having from 5 to 10 carbon atoms or a mixture of said aliphatic dicarboxylic acids; (b) a mixture of neopentyl glycol and ethylene glycol, and (c) an aliphatic saturated monofunctional alcohol having from 6 to 13 carbon atoms or an aliphatic saturated monocarboxylic acid having from about 6 to 13 carbon atoms.

To obtain the copolyesters essentially stoichiometric amounts of acid and alcohol components are reacted to an acid value less than about 3 and hydroxyl value less than about 25. To aid in driving the esterification essentially to completion, a slight excess of ethylene glycol and/or monofunctional alcohol is generally employed. About 40 to 60 equivalent percent aliphatic saturated dicarboxylic acid and 40 to 60 equivalent percent phthalic acid, based on the total acid equivalents, are reacted. Ethylene glycol is generally reacted in an amount from about 30 to about 60 equivalent percent and neopentyl glycol is reacted in an amount from about 30 to 60 equivalent percent, based on the total alcohol equivalents. About 8 to 30 equivalent percent monofunctional alcohol, based on the total alcohol equivalents, or about 8 to 30 equivalent percent monocarboxylic acid, based on the total acid equivalents, is generally reacted. The copolyesters are advantageously utilized to plasticize PVC homopolymer and copolymer resins and used in amounts ranging from 30 to about 150 phr.

The improved copolyester plasticizers of the present invention are the reaction product of essentially stoichiometric amounts of a mixed acid component and a mixed alcohol component. The acid mixture contains one or more aliphatic saturated dicarboxylic acids and phthalic acid. The alcohol component is a mixture of ethylene glycol and neopentyl glycol. An aliphatic monofunctional alcohol or aliphatic monocarboxylic acid is used as a chain terminator.

Aliphatic saturated dicarboxylic acids utilized for the preparation of copolyesters contain from 5 to 10 carbon atoms. Representative dicarboxylic acids include glutaric acid, adipic acid, pimelic acid, suberic acid, azelaic acid, sebacic acid, and mixtures thereof. Other aliphatic dicarboxylic acids outside the specified carbon content range may be present in limited quantities. It is particularly advantageous if the aliphatic dicarboxylic acid contains from 6 to 9 carbon atoms. Highly efficient plasticizer compositions are obtained when adipic acid, azelaic acid or mixtures thereof are employed for the preparation of the copolyester.

Phthalic acid is utilized in conjunction with the aliphatic dicarboxylic acid(s). The phthalic acid used can be any of the isomeric forms, i.e., ortho-, meta-, or para-phthalic acid, however, the ortho-and para-are generally preferred. In one embodiment of the invention, highly effective plasticizer compositions are obtained utilizing terephthalic acid. It will also be understood by those skilled in the art that the anhydride or methyl ester forms of the various phthalic acids can be utilized for the preparation of the present copolyester products.

A hydroxylic component is reacted with the above-described mixture of acids to obtain the useful copolyester plasticizers of this invention. This alcohol component contains ethylene glycol and neopentyl glycol, present in a prescribed ratio.

A monofunctional alcohol or monocarboxylic acid is also necessarily present as a chain-stopper, i.e., terminator. Branched-chain or linear aliphatic saturated monofunctional alcohols or monocarboxylic acids having from 6 to 13 carbon atoms and, more preferably, 8 to 10 carbon atoms are utilized for this purpose. Representative monofunctional alcohols include 2-ethylhexanol, isooctyl alcohol, isodecyl alcohol, tridecyl alcohol, n-hexanol, n-octanol, n-decanol, and the like. Representative monocarboxylic acid terminators include 2-ethylhexanoic acid, octanoic acid, pelargonic acid, isoheptanoic acid, decanoic acid, and the like. Mixtures of alcohol and acid terminators may also be advantageously used.

Although the individual reactants employed to obtain the improved plasticizers of this invention are known for the preparation of polyesters, the present copolyester compositions are novel as a result of the particular combination of these reactants and the unique and unexpected properties obtained thereby. Whereas the skilled artisan would expect the migration characteristics to be unacceptable as a result of the introduction of an aromatic acid and as a result of the substitution of ethylene glycol for a portion of the neopentyl glycol, this is not the case. Applicants have quite unexpectedly found that both phthalic acid and ethylene glycol can be advantageously utilized to reduce the cost of the product while obtaining acceptable migration properties. This is accomplished by judicious selection of the dicarboxylic acids, hydroxylic compounds, and the ratio of these reactants. The superior migration properties of the present copolyester products are even more more unexpected in view of the relatively low molecular weight of these products. Also, the improved processing characteristics of PVC plasticized with the resulting copolyesters is totally unexpected.

To obtain the improved copolyester plasticizers essentially stoichiometric amounts of the acid component and the alcohol component are reacted. The aliphatic saturated dicarboxylic acid comprises from about 40 to about 60 equivalent percent of the total acid equivalents and the phthalic acid constitutes from about 40 to about 60 equivalent percent of the total acid equivalents. The ethylene glycol is present in an amount from about 30 to about 60 equivalent percent, based on the total equivalents of alcohol in the mixture. Neopentyl glycol is present in an amount from about 30 to about 60 equivalent percent, based on the total alcohol equivalents. The aliphatic saturated monofunctional alcohol or monocarboxylic acid terminator is employed in an amount from about 8 to about 30 equivalent percent, based on the total equivalents of alcohol or acid.

The resulting copolyesters generally have average molecular weights in the range 500 to about 1500. More usually, the molecular weight ranges from 700 to about 1100. The copolyesters have 100°F kinematic viscosities in the range 600 to about 2000 centistokes and, more generally, in the range 900 to 1300 centistokes. The acid value of the products is generally 3 or less and the hydroxyl value is generally 25 or less.

The copolyesters are prepared using conventional reaction techniques. Reaction of the components to obtain the desired copolyesters is carried out in standard esterification equipment using established esterification procedures. Typically, all of the reactants are charged to a suitable esterification kettle and heated at atmospheric pressure at temperatures on the order of about 150-250°C for a period of time sufficient to substantially complete the esterification. The reaction may be driven to completion by distillation in vacuum (typically 2-50 mm Hg absolute at 200-250°C) until the desired acid value is obtained. The distillation in vacuum removes the final traces of water, any excess glycol and also small amounts of volatile materials. The plasticizer is then cooled and is normally ready for use.

If an improvement in color is desired. the product may be bleached by any of the well known and accepted bleaching methods, e.g., using hydrogen peroxide or hypochlorite. Alternatively, the copolyester can be decolorized by filtering through a filter aid, charcoal or bleaching clay.

Whereas the esterification reaction is generally carried out without use of a catalyst, where shorter reaction times are desired, a catalyst may be advantageous. Known esterification catalysts. such as phosphoric acid, p-toluene sulfonic acid. stannous oxalate, alkyltin oxides, or the like can be utilized in small amounts and facilitate the reaction. When esterification is complete, the catalyst may be deactivated or removed by filtering or other conventional means.

Inert diluents such as benzene, toluene, xylene, and the like can be employed for the reaction. however. they are not necessary. In fact, it is generally considered to be desirable to conduct the reaction without diluents since the copolyester can be directly used as it is obtained from the reactor.

The copolyester plasticizer compositions of the present invention are useful for PVC homopolymers and PVC copolymers wherein one or more other ethylenically unsaturated monomers is copolymerized with vinyl chloride. Comonomers useful in the preparation of the polyvinyl chloride copolymers include: vinyl bromide; vinyl acetate; vinylidene chloride: lower allyl esters: vinyl alkyl ethers: acrylonitrile and methacrylonitrile; acrylic acid and methacrylic acid: acrylic and methacrylic esters such as methyl acrylate. ethyl acrylate and methyl methacrylate; styrene; and the like. The copolyesters are particularly useful with copolymers of vinyl chloride with vinyl acetate, vinyl chloride with vinyl butyrate. vinyl chloride with vinyl propionate, vinyl chloride with methyl methacrylate, vinyl chloride with vinylidene chloride and vinyl chloride with two or more comonomers, such as mixtures of vinylidene chloride and 2-ethylhexylacrylate, particularly when the copolymers contain 75 percent by weight or more bound vinyl chloride.

The amount of copolyester used can be widely varied and will range from about 30 up to about 150 parts by weight per 100 parts by weight of the vinyl chloride homopolymer or copolymer. In a particularly useful embodiment of the invention where the copolyester is utilized for the plasticization of PVC refrigerator gaskets, from about 60 to 110 parts by weight plasticizer per 100 parts resin is utilized. The copolyesters can be utilized in combination with other plasticizers. When combined with other plasticizers. the total amount of plasticizer will generally fall within the above-prescribed ranges.

The copolyesters of this invention are also compatible with other known compounding ingredients commonly employed in the formulation of PVC. Such ingredients include stabilizers to protect the resin from the deleterious effects of oxidative. thermal and photochemical degradation, fillers. pigments. dyes. lubricants, and other processing aids. As is evident to those skilled in the art of compounding and formulating PVC, the type and amount of compounding ingredients used will be determined by the physical properties desired.

The following examples illustrate the invention more fully. They are not. however. intended as a limitation on the scope thereof. In the examples all weights and percentages are on a weight basis unless otherwise indicated.

EXAMPLE I

A typical copolyester plasticizer was prepared by reacting the following:

| Reactant | Equivalent Percent |
|---|---|
| Azelaic Acid | 24.8 |
| Adipic Acid | 24.8 |
| Phthalic Anhydride | 50.4 |
| | |
| Ethylene glycol | 35.0* |
| Neopentyl glycol | 35.0 |
| 2-Ethylhexanol | 30.0* |

*23% equivalent excess ethylene glycol and 7% equivalent excess 2-ethylhexanol was employed to aid in driving the reaction to completion.

The above ingredients were charged to a three-necked, round bottom flask equipped with a suitable agitator, a thermometer, and a medium length Vigreaux distillation column and condenser. The condenser was arranged so that material could be distilled from the reaction at either atmospheric or reduced pressure. A small amount $H_3PO_2$ (0.01 weight percent) and dibutyltin diacetate (0.03 weight percent) were added to the reactor and the reaction mixture heated to 225-235°C while removing water of reaction. The temperature was maintained until the reaction slowed, as evidenced by a marked reduction in the rate of water evolution. At this point, a vacuum was applied. The pressure was gradually reduced to a final pressure of about 2 mm Hg with the temperature at 225-250°C so that controlled distillation of the volatile components (water and excess alcohol) was achieved. The reaction was followed by measuring the acid value (AV) of the reaction mixture and terminated when the AV was less than 0.5. The reaction mixture was then cooled to room temperature and filtered using a diatomaceous earth filter aid to remove catalyst and other impurities. The final copolyester product had an average molecular weight of about 1100, AV of 0.3, hydroxyl value (OHV) of 15.7 and kinematic viscosities at 100°F and 210°C of 1218 cSt and 105 cSt. respectively. The clear, essentially colorless liquid was useful as plasticizer without further modification or processing and was readily incorporated into PVC resin homopolymers and copolymers using conventional processing equipment to produce clear pliable sheets.

A standard PVC resin formulation was prepared in accordance with the following recipe:

| | PHR |
|---|---|
| PVC resin (GEON 102) | 100 |
| Barium-Cadmium Stabilizer (FERRO 1820) | 2 |
| Phosphite Stabilizer (FERRO 904) | 1 |
| Copolyester Plasticizer | 67 |

The ingredients were milled for about 10 minutes on a standard two-roll rubber mill (6 × 12 inch rolls heated to about 170°C and set for a sheet thickness of about 0.25 inch). Sheets of uniform 20 mil thickness were then prepared by pressing using a chrome-plated ASTM mold at about 177°C for 6 minutes at 1500 psi. Test specimens were cut from the pressed sheet and physical properties determined using conventional test methods. Properties of the plasticized resin were as follows:

| | |
|---|---:|
| Elongation (%) | 290 |
| 100% Modulus (psi) | 1623 |
| Tensile Strength (psi) | 3350 |
| Shore "A" Hardness | 86/82 |
| Roll Spew (5 hours at RT) | None |
| Brittle Point (°C) | -5 |
| Extraction (percent weight loss): | |
| Soapy Water (90°C; 24 hours) | 4.4 |
| Oil (50°C; 24 hours) | 1.1 |
| Hexane (25°C; 24 hours) | 1.2 |

The above data shows that excellent physical properties are obtained for the PVC plasticized with the copolyester of the present invention.

EXAMPLE II

To demonstrate the ability to vary the composition, Example I was repeated using the following reactant charge:

| Reactant | Equivalent Percent |
|---|:---:|
| Azelaic Acid | 24.8 |
| Adipic Acid | 24.8 |
| Phthalic Anhydride | 50.4 |
| | |
| Ethylene glycol | 37.5 |
| Neopentyl glycol | 37.5 |
| 2-Ethylhexanol | 25.0 |

A slight excess of ethylene glycol and 2-ethylhexanol was employed. The resulting copolyester composition had an average molecular weight of 1850, an AV of 0.3, OHV of 17.3, 100°F and 210°F kinematic viscosities fo 2005 cSt and 183 cSt, respectively. Plasticized PVC formulated in accordance with the recipe of Example I had the following properties:

| | |
|---|---:|
| Elongation (%) | 280 |
| 100% Modulus (psi) | 1650 |
| Tensile Strength (psi) | 3400 |
| Shore "A" Hardness | 87/83 |
| Roll Spew (5 hours at RT) | None |
| Brittle Point (°C) | -3 |
| Extraction (percent weight loss): | |
| Soapy Water (90°C; 24 hours) | 3.0 |
| Oil (50°C; 24 hours) | 1.0 |
| Hexane (25°C; 24 hours) | 1.0 |

EXAMPLE III

For comparative purposes, a copolyester derived from aliphatic dibasic acids and a mixture of neopentyl glycol and propylene glycol of the type typically utilized commercially for the formulation of PVC refrigerator gaskets was prepared from the following reactants:

| Reactant | Equivalent Percent |
|---|---|
| Adipic Acid | 45.5 |
| Azelaic Acid | 45.0 |
| Mixed $C_{8-20}$ Monocarboxylic Acids | 9.0 |
| Neopentyl glycol | 50.0 |
| Propylene glycol | 50.0 |

The reaction was carried out following the procedure of Example I and a slight excess of propylene glycol was employed as an aid in driving the esterification reaction toward completion. The resulting copolyester had an AV of 0.3, OHV of 20.0, and 100°F and 210°F kinematic viscosities of 1637 cSt and 122 cSt, respectively.

EXAMPLE IV

PVC refrigerator gasket formulations were prepared using the copolyester product of this invention prepared in Example I and the typical prior art copolyester product prepared in Example III. The resin formulations were prepared in accordance with the following recipe:

| | PHR |
|---|---|
| VYGEN 112 PVC | 100.0 |
| Calcium Carbonate | 50.0 |
| Epoxidized Soya | 5.0 |
| Titanium Dioxide | 1.5 |
| Stabilizer (Ba-Cd soaps and phosphite)/ Fungicide Package | 5.8 |
| Plasticizer | 95.0 |

The ingredients were blended on a standard two-roll mill as described in Example I and physical properties of the plasticized resins determined. The properties of the vinyl formulation were as follows:

|  | Plasticizer of Ex. I | Plasticizer of Ex. III |
|---|---|---|
| Elongation (%) | 330 | 370 |
| 100% Modulus (psi) | 640 | 450 |
| Tensile Strength (psi) | 1875 | 1325 |
| Shore "A" Hardness | 63/58 | 66/62 |
| Roll Spew (5 hours at RT) | | |
| Brittle Point (°C) | -7 | -28 |
| Extraction (percent weight loss): | | |
|    Water (48 hours; 150°F) | 0.5 | 0.6 |
|    WESSON Oil (48 hours; RT) | 0.6 | 2.5 |
|    JOY (48 hours; 150°F) | 1.5 | 0.9 |

It is apparent from the above data that physical properties obtained for the resin formulation containing the plasticizer of Example I are comparable to those obtained using the commercial plasticizer of Example III. Furthermore, both formulations exhibited comparable resistance to migration and resistance to marring of ABS and polystyrene resins.

Whereas the copolyester of Example I which used ethylene glycol with the neopentyl glycol and phthalic anhydride with the aliphatic acids and the copolyester of Example III which contained no ethylene glycol and phthalic anhydride had comparable plasticization efficiency. resistance to migration and resistance to marring, significant processing improvements are obtained by the use of the plasticizers of this invention. To demonstrate these advantages, dry blend and fusion characteristics of the above formulations were determined using a torque rheometer (Brabender Plasticorder) in accordance with ASTM Designations D 2396-79 and D 2538-79, respectively. The powder mix (dry blending) evaluation was carried out at two different temperatures (100°C and 85°C) for comparison purposes. Both evaluations were run using 300 grams of the resin formulation using a sigma mixing head at 63 rpm. Dry blending results obtained for the resin formulations were as follows:

|  | Plasticizer of Ex. I | Plasticizer of Ex. III |
|---|---|---|
| **Dry-Blending at 100°C:** | | |
|    Time to Peak Torque (Minutes and Seconds) | 1'30" | 1'45" |
|    Peak Torque (Meter-Grams) | 130 | 160 |
| **Dry-Blending at 85°C:** | | |
|    Time to Peak Torque (Minutes and Seconds) | 5'15" | 8'30" |
|    Peak Torque (Meter-Grams) | 100 | 140 |

It is apparent from the above data that the product formulated utilizing the copolyester of Example I requires less time and lower torque (less work) to achieve dry blending. Higher throughputs are therefore possible with substantial energy savings using standard equipment and standard operating conditions. Also. as a result of the improved mixing ability it may be possible to accomplish dry-blending at lower operating temperatures.

Fusion characteristics for two resin formulations were determined using 70 grams of dry-blended material run using a No. 6 roller head at 170°C and 31.5 rpm. Fusion time (time to peak fusion minus time to initial fusion) for the formulation containing the copolyester of Example III was 60 seconds whereas only 45 seconds were required to achieve fusion of the formulation plasticized with the copolyester of Example I. Thus, utilizing the copolyester products of this invention it is possible to increase the extrusion throughput and/or reduce the residence time and therefore heat history of the formulation during the extrusion operation.

## EXAMPLES V-IX

To demonstrate the versatility of the present invention and the ability to vary the composition of the copolyester plasticizers, a series of preparation was carried out following the general procedure described for Example I. Types and amounts of reactants used and properties of the resulting copolyester products are reported in Table I. PVC formulations were prepared as described in Example I. Where determined, physical properties obtained for the plasticized resins are set forth in Table II.

TABLE I

| | EX. V | EX. VI | EX. VII | EX. VIII | EX. IX |
|---|---|---|---|---|---|
| **Reactants:** | | | | | |
| Adipic Acid | 58.1 | 45.3 | 45.6 | 24.8 | 32.3 |
| Azelaic Acid | 6.9 | 53.0 | 5.2 | 24.8 | 3.7 |
| Phthalic Anhydride | -- | 49.4 | 49.2 | 50.4 | 34.9 |
| Dimethyl Terephthalate | 35.0 | -- | -- | -- | -- |
| Neopentyl Glycol | 27.8 | 36.8 | 26.2 | 35.0 | 50.0 |
| Ethylene Glycol | 47.1 | 34.4 | 44.7 | 35.0 | 50.0 |
| 2-Ethylhexanol | -- | 28.8 | -- | -- | -- |
| 2-Ethylhexanoic Acid | -- | -- | -- | -- | 29.1 |
| Isodecyl Alcohol | 25.1 | -- | 29.1 | -- | -- |
| Isooctyl Alcohol | -- | -- | -- | 30.0 | -- |
| **Properties:** | | | | | |
| Acid Value | 0.2 | 0.8 | 0.4 | 0.5 | 0.8 |
| Hydroxyl Value | 9.0 | 13.8 | 0.9 | 11.4 | 17.3 |
| 100°F Kinematic Viscosity (cSt) | 905 | 1170 | 775 | 989 | 1168 |

0 245 665

## TABLE II

| | EX. V | EX. VII | EX. VIII | EX. IX |
|---|---|---|---|---|
| Elongation (%) | 320 | 300 | 337 | 310 |
| 100% Modulus (psi) | 1625 | 1650 | 1650 | 1625 |
| Tensile Strength (psi) | 3400 | 3325 | 3475 | 3500 |
| Shore "A" Hardness | 85/80 | 83/79 | 83/79 | 82/77 |
| Roll Spew (5 hours at RT) | None | None | None | None |
| Brittle Point (°C) | -17 | N.D. | -12 | N.D. |
| Extraction (percent weight loss): | | | | |
| Soapy Water (90°C; 24 hours) | 3.4 | N.D. | 5.3 | N.D. |
| Oil (50°C; 24 hours) | 2.0 | N.D. | 1.7 | N.D. |
| Hexane (25°C; 24 hours) | 4.7 | N.D. | 2.3 | N.D. |

N.D. = not determined

0 245 665

## Claims

1. An improved copolyester plasticizer having an average molecular weight of 500 to 1500 and 100°F kinematic viscosity of 600 to 2000 centistokes obtained by the esterification of (a) a mixture of phthalic acid and an aliphatic saturated dicarboxylic acid having from 5 to 10 carbon atoms or a mixture of $C_{5-10}$ aliphatic saturated dicarboxylic acids, (b) a mixture of neopentyl glycol and ethylene glycol, and (c) an aliphatic saturated monofunctional alcohol or monocarboxylic acid having from 6 to 13 carbon atoms.

2. The improved copolyester plasticizer of Claim 1 wherein essentially stoichiometric amounts of acid components and alcohol components are reacted to an acid value < 3 and hydroxyl value < 25.

3. The improved copolyester plasticizer of Claim 1 or 2 wherein the aliphatic saturated dicarboxylic acid is present in an amount from 40 to 60 equivalent percent and the phthalic acid is present in an amount from 40 to 60 equivalent percent, based on the total acid equivalents.

4. The improved copolyester plasticizer of Claim 3 wherein (a) is a mixture of adipic acid and azelaic acid with ortho-phthalic acid.

5. The improved copolyester plasticizer of Claim 3 wherein (a) is a mixture of adipic acid and azelaic acid with terephthalic acid.

6. The improved copolyester plasticizer of Claims 1 to 5 wherein the neopentyl glycol is present in an amount from 30 to 60 equivalent percent and the ethylene glycol is present in an amount from 30 to 60 equivalent percent, based on the total alcohol equivalents.

7. The improved copolyester plasticizer of any of Claims 1 to 6 wherein (c) is an aliphatic saturated monofunctional alcohol present in an amount from about 8 to 30 equivalent percent, based on the total equivalents of alcohol.

8. The improved copolyester plasticizer of Claim 7 wherein the aliphatic saturated monofunctional alcohol contains from 8 to 10 carbon atoms.

9. The improved copolyester plasticizer of Claim 8 wherein the aliphatic saturated monofunctional alcohol is 2-ethylhexanol, isooctyl alcohol or isodecyl alcohol.

10. The improved copolyester plasticizer of any of Claims 1 to 6 wherein (c) is an aliphatic saturated monocarboxylic acid present in an amount from about 8 to 30 equivalent percent, based on the total equivalents of acid.

11. The improved copolyester plasticizer of Claim 10 wherein the aliphatic saturated monocarboxylic contains from 8 to 10 carbon atoms.

12. The improved copolyester plasticizer according to any of Claims 1 to 11 which includes combining the plasticizer with polyvinyl chloride homopolymer or polyvinyl chloride copolymer, the plasticizer being present in an amount of 30 to 150 parts by weight per 100 parts of the vinyl chloride homopolymer or copolymer.

13. An improved polymer composition comprising polyvinyl chloride homopolymer or polyvinyl chloride copolymer and 30 to 150 parts by weight, per 100 parts resin, of an improved copolyester plasticizer having an average molecular weight of 500 to 1500 and 100°F kinematic viscosity of 600 to 2000 centistokes obtained by the esterification of (a) a mixture of phthalic acid and an aliphatic saturated dicarboxylic acid having from 5 to 10 carbon atoms or a mixture of $C_{5-10}$ aliphatic saturated dicarboxylic acids, (b) a mixture of neopentyl glycol and ethylene glycol, and (c) an aliphatic saturated monofunctional alcohol or monocarboxylic acid having from 6 to 13 carbon atoms.